Europäisches Patentamt

(19) European Patent Office

Office européen des brevets

(11) Publication number: **0 284 396**
A2

# EUROPEAN PATENT APPLICATION

(21) Application number: 88302622.1

(22) Date of filing: 24.03.88

(51) Int. Cl.⁴: **B 60 C 11/00**

(30) Priority: 24.03.87 US 29689

(43) Date of publication of application:
28.09.88 Bulletin 88/39

(84) Designated Contracting States: DE FR IT SE

(71) Applicant: Traina, Salvatore F.
1389 Potter Boulevard
Bayshore New York 11706 (US)

(72) Inventor: Traina, Salvatore F.
1389 Potter Boulevard
Bayshore New York 11706 (US)

(74) Representative: Woodward, John Calvin et al
VENNER SHIPLEY & CO. 368 City Road
London EC1V 2QA (GB)

(54) Tire for racing sulkies.

(57) The present invention relates to a tire adapted to be used in sulky races. The tire has a V-shape tread which is adapted to frictionally engage the actual surface of a racing track and to cut through the mud covering the track thereby improving traction and ensuring a safer ride for both the driver and the horse.

EP 0 284 396 A2

**Description**

## TIRE FOR RACING SULKIES

### BACKGROUND OF THE INVENTION

This invention relates to a tire, and in particular to a tire adapted to be used in a racing sulky. The invention relates more particularly to an improvement for tires used in racing sulkies where a V-shape tread is adapted to frictionally engage the actual surface of a racing track and to cut through the mud covering the track, thereby improving traction and ensuring a safer ride for both the driver and the horse.

Sulky tires associated with the prior art suffer from a loss of traction on a muddy track. A typical driver of a sulky weighs about 150-175 lbs. When the driver is seated in a sulky, his weight will cause the tire to flatten out at its bottom. This causes a surfacing or sliding of the entire sulky. When the sulky slides, the shafts tend to pull the horse sideways and can cause the driver to lose control. This creates a hazardous condition for the driver and the horse. Further, since the driver must concentrate on maintaining control of the horse and the sulky under this hazardous condition, the driver is necessarily distracted from concentrating on winning the race.

### SUMMARY OF THE INVENTION

Hence, with the foregoing in mind, it is a primary object of the present invention to provide an improved sulky tire which avoids the aforementioned drawbacks and limitations of the prior art proposals.

Another and more specific object of the present invention aims at providing a new and improved sulky tire which promotes the safety of a driver and horse by providing for improved traction between the tire and the track.

Yet a further object of the present invention aims at reducing the amount of frictional surface contact between the tire and the track so that the sulky can travel faster than is possible in the aforementioned prior art proposals.

In order to implement these and other objects of the invention, which will become more readily apparent as the description proceeds, the present invention comprises a tire having a V-shape tread adapted to frictionally engage a muddy surface and adapted to provide improved traction thereon.

### BRIEF DESCRIPTION OF THE DRAWINGS

For a fuller understanding of the nature and objects of the invention, reference should be had to the following detailed description, taken in connection with the accompanying drawings, in which:

FIG. 1 is a perspective view of a sulky tire known in the prior art;

FIG. 2 is a perspective view illustrating an embodiment of the present invention;

FIG. 3. is a partial front view of the tire of FIG. 2; and

FIG. 4. is a sectional view taken along the lines 4-4 of FIG. 3.

### DETAILED DESCRIPTION OF THE PREFERRED EMBODIMENT

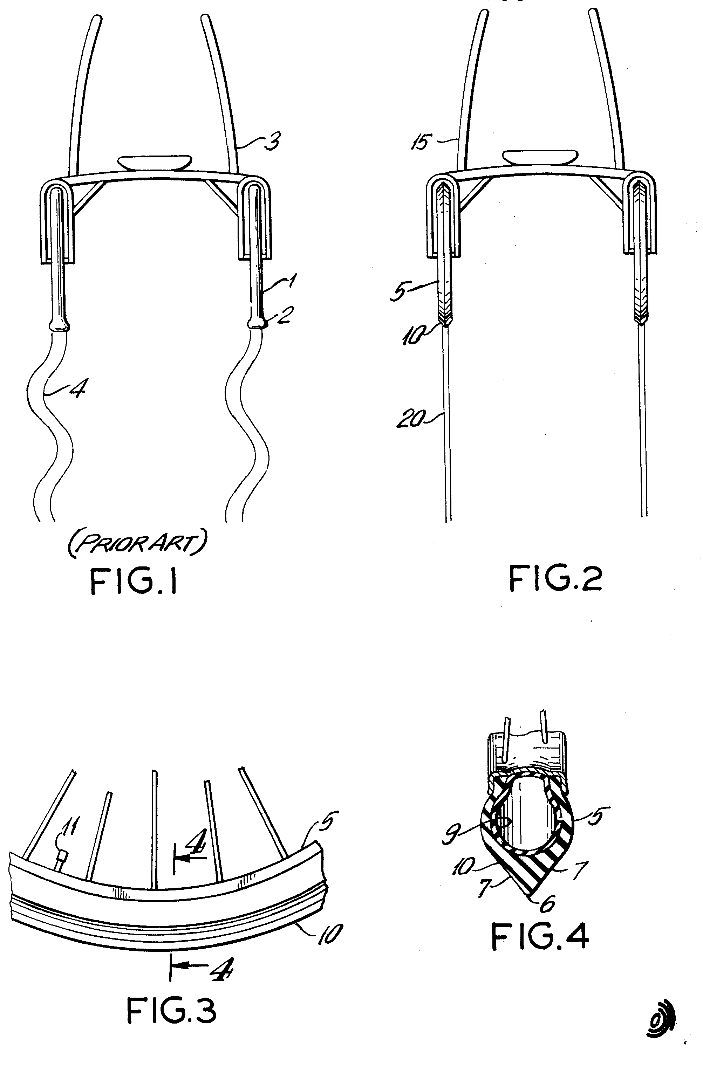

Referring now to the drawings, Figure 1 illustrates a sulky tire of the type known in the prior art.

As can be seen from Figure 1, the bottom portion 2 of the tire 1 is in contact with a surface such as a racing track and is flat due to the weight of the cart 3 and the driver (not shown) seated in the cart 3.

As the tire 1 passes over a muddy surface it loses traction and moves sideways or in a wobbly path 4, thus creating hazardous conditions for both the driver and the horse. In a sulky race, the horse must make banked turns which cause the tire 1 to slide sideways on a muddy track.

Figures 2-4 illustrate the preferred embodiment of the present invention. The present invention provides an improvement over the prior art sulky tire 1 of Fig. 1. Fig. 2 shows the tread 10 of the present invention which can be formed as a longitudinal strip added to and around the entire circumference of the sulky tire 1 of Fig. 1. The material used for the tread 10 is the same as that of the tire 1.

The tire 5 of Figure 2 has a V-shape tread 10. The V-shape tread 10 is defined by two substantially smooth surfaces 7 which converge at an edge 6. The V-shape tread 10 is designed to maintain it's rigid edge 6 and not to flatten out, even under the weight of the cart 15 and the driver (not shown) seated in the cart 15. By maintaining its rigid edge 6, the tire 5 is able to cut through mud covering the track and ensure improved traction due to the tire's frictional engagement with the actual surface of the track instead of the mud covering the track. Therefore, the tire 5 travels along a path 20 which follows the movement of the horse rather than the sideways or wobbly path 4 shown in Figure 1. Further, the tire 5 will not slip or slide sideways due to the surface area of the tire 5 in actual contact with the track.

In particular, the tire 5 is designed to provide improved traction on a harness racing track including a muddy or wet harness racing track.

The preferred dimensions for the tread are 1/2" × 3/4" × 1/2" for a sulky tire having the dimensions:26" - 30" diameter × 1 3/8" × 1 5/8". For a jog cart, used for training purposes, the tire 5 has the dimensions 26" through 30" diameter × 2 3/8" × 2 5/8", the tread should have the dimensions:, 3/4" × 1" × 3/4".

The 3/4" width of the tire 5 should be centrally located with respect to the surface of the width of the tire 5. The tread 10 is preferably formed integral with the tire 5 by means of manufacturing techniques which are known in the art, such as molding .

From the above dimensions, it can be seen that in a typical race an average driver weighing 150-175 lbs will produce a surface area of 1 1/2" of tire (Fig. 1) riding on the track. By contrast, only 1/8" to 1/4" of tire 5 will touch the track. The V-shape tread will ensure that the edge 6 touches the actual surface and sprays mud away from the tire, thereby steadying the sulky.

The tire 5 is preferably a pneumatic tire having an inner tube (FIG. 4) which is inflated by means of an air valve 11 (FIG. 3).

A sulky wheel is manufactured as either a spoke wheel or as a plastic wheel having a plastic hub and 5 spokes. The tire 5 of Fig. 4 can be applied to both wheels.

In addition, to improving safety during racing, the V-shape tread 10 provides a significant reduction in the contact surface area of the tire 5 and thus reduces the amount of friction between the tire 10 and the surface of the track. This reduction of the tire's frictional surface permits the tire 10 to move faster, even on a non-muddy track.

Although the tire has been designed specifically for racing sulkies, it is understood that the invention is not limited solely to that particular application. Other applications for the tire are possible with the appropriate dimensional changes thereto, e.g. bicycle racing.

I do not limit myself to any particular details of construction set forth in the Specification and illustrated in the accompanying drawings, as the same refer to and sets forth only one embodiment of the invention, and it is observed that the same may be modified without departing from the spirit and scope of the invention.

## Claims

1. A tire for use in a sulky having a V-shape tread adapted to frictionally engage a muddy surface and adapted to provide improved traction thereon.

2. A tire according to claim 1 wherein said V-shape tread defines a substantially narrow contact area adapted to frictionally engage a surface so as to cut through mud covering said surface.

3. A tire according to claim 1 wherein said V-shape tread includes two substantially smooth side walls converging at an edge wherein said edge is adapted to frictionally engage a surface covered by mud.

4. A tire according to claim 3 wherein said edge has a minimum surface area so as to reduce frictional contact with said surface.

5. A tire according to claim 1 wherein said tire is pneumatic.

6. A tire according to claim 3 wherein said edge is dimensioned to resist flattening under pressure.

7. A tire according to claim 1 wherein said tire has the dimensions of 26"-30" × 1 3/8" × 1 5/8" and said V-shape tread has the preferred dimensions of 3/4" × 1" × 3/4".

8. A tire according to claim 1 wherein said tread is centrally disposed with respect to the width of said tire.

0284396

3

1

2

4

(PRIOR ART)

# FIG.1

15

5

10

20

# FIG.2

11

5

4

10

4

# FIG.3

9

5

10

7

7

6

# FIG.4